# EUROPÄISCHE PATENTANMELDUNG

(11) **EP 2 564 921 A1**
(43) Veröffentlichungstag der Anmeldung: **06.03.2013**
(21) Anmeldenummer: 11009123.8
(22) Anmeldetag: 17.11.2011
(51) Int. Cl.: B01J 8/10, B01J 8/12, B01D 53/00

(54) **Kolonne zum Trennen eines Gasgemisches**

(30) Priorität: 30.08.2011 DE 102011111955
(71) Anmelder: Linde Aktiengesellschaft, 80331 München (DE)
(72) Erfinder: Porz, Lutz, 76530 Baden-Baden (DE); Windmeier, Christoph, Dr., 82538 Geretsried (DE)

(57) **Zusammenfassung**

Die Erfindung betrifft eine Einrichtung (1) zum Trennen eines Gasgemisches, mit: einem ersten Reaktor (10), mit einem Mantel (100), der einen Reaktorraum (R) zur Aufnahme des zu trennenden Gasgemisches (G) begrenzt. Erfindungsgemäß ist vorgesehen, dass die Einrichtung (1) zum Zermahlen eines im Reaktorraum (R) befindlichen Stoffes dazu ausgebildet ist, eine Mehrzahl an Kugeln (K) durch den Reaktorraum (R) im Gegenstrom zu jenem Gasgemisch (G) entlang einer Bewegungsrichtung (B) zu führen.

## Beschreibung

Die Erfindung betrifft eine Einrichtung zum Trennen eines Gasgemisches gemäß dem Oberbegriff des Anspruchs 1.

Eine solche Einrichtung weist zumindest einen ersten Reaktor auf, mit einem Mantel, der einen Reaktorraum zur Aufnahme des zu trennenden Gasgemisches begrenzt.

Eine Einrichtung zum Trennen eines binären Gasgemisches mit Hilfe von Clathrat-Hydraten ist z.B. aus der US 2,399,723 und der US 3,231,630 bekannt.

Bei der Trennung eines (binären) Gasgemisches mit Hilfe von Clathrat-Hydraten stellt sich insbesondere das Problem, dass bei Vermeidung eines überstöchiometrischen Wasseranteils eine hochviskose Hydratschlacke (sogenannter Hydratslurry) gebildet wird, die ein Zuwachsen der verwendeten Apparatur bzw. des verwendeten Reaktors verursachen kann. Bei Clathrat-Hydraten handelt es sich um feste Einschlussverbindungen von in der Regel gasförmigen Stoffen in Wasser. Bei Clathraten mit Wasser liegt das Stoffmengenverhältnis Gas/Wasser in der Regel unter 8/48, bei großen einzulagernden Gasteilchen sogar unter 8/136.

Aufgrund der Problematik des Zuwachsens ist daher üblicherweise zur Sicherstellung der Strömungsfähigkeit einer Gashydratschlacke ein entsprechend großer (überstöchiometrischer) Wasseranteil zu verwenden. Dies hat eine starke Hemmung des Stofftransports im Apparat zur Folge, was im Rahmen einer kommerziellen Nutzung zu entsprechend großen, technisch nicht sinnvollen Apparatedimensionen führt.

Hiervon ausgehend liegt daher der vorliegenden Erfindung die Aufgabe zugrunde, eine Einrichtung der eingangs genannten Art bereitzustellen, die im Hinblick auf die vorgenannte Problematik verbessert ist.

Dieses Problem wird durch eine Einrichtung mit den Merkmalen des Anspruchs 1 gelöst.

Danach ist vorgesehen, dass die Einrichtung bzw. der Reaktor zum Zermahlen eines im Reaktorraum befindlichen Stoffes, insbesondere umfassend eine aus einem Gas des zu trennenden Gasgemisches und Wasser gebildete Gashydratschlacke (so genanntes Slurry), dazu ausgebildet ist, eine Mehrzahl an im Reaktorraum befindlichen, vorzugsweise kugelförmigen Mahlkörpern durch den Reaktorraum im Gegenstrom zu jenem Gasgemisch entlang einer Bewegungsrichtung zu führen bzw. zu transportieren.

Die besagten Kugeln bilden dabei vorzugsweise eine entlang der Bewegungsrichtung sich bewegende Kugelschüttung, die insbesondere laufend nachgefüllt wird, indem aus einem Sumpf des Reaktors abgezogene Kugeln am Kopf des Reaktors wieder eingefüllt werden (Kreislauf). Die Kugeln bilden also ein Wanderbett. Beim Führen bzw. Transportieren entlang der Bewegungsrichtung durch den Reaktorraum nehmen die Kugeln vorzugsweise jenen Feststoff (Gashydrat) entlang der Bewegungsrichtung mit, so dass jener Stoff insbesondere zwischen die Kugeln gelangt und durch die Kugeln gefördert und gleichzeitig zermahlen bzw. zerkleinert wird.

Damit die Kugeln das entstehende Gashydrat bei Ihrer Bewegung entlang der Bewegungsrichtung gut zermahlen bzw. zerkleinern können, bestehen die Kugeln vorzugsweise aus einem entsprechend widerstandsfähigen Material, z.B. aus einem Metall, einem Stahl, einer Aluminiumlegierung, einem Hartgummi, einem Glas, einem Kunststoff, einem natürlichen oder künstlichen Mineral oder einer (vorzugsweise hochfesten) Keramik.

Bevorzugt erstreckt sich der Mantel des ersten Reaktors entlang einer Längsachse, die - bezogen auf einen bestimmungsgemäß angeordneten Zustand des Reaktors - vorzugsweise parallel zur Vertikalen orientiert ist. Dabei ist die Bewegungsrichtung des Kugelbettes vorzugsweise entlang der Längsachse bzw. entlang der Vertikalen nach unten gerichtet. Der Mantel kann beispielsweise einen hohlzylindrischen mittleren Abschnitt aufweisen, der entlang der Längsachse nach oben hin in einen Kopf des Reaktors übergeht. Ein dem Kopf gegenüberliegender unterer Endabschnitt des Mantels bildet einen Sumpf des Reaktors.

Am Kopf des Reaktors bzw. des Mantels ist vorzugsweise ein erster Einlass vorgesehen, durch den hindurch die Kugeln in den Reaktorraum eingeführt werden können, um dort eine Kugelschüttung (Kugelbett) auszubilden. Auf der Höhe des Einlasses findet vorzugsweise eine Verteilung der Kugeln über den Querschnitt des Reaktors statt.

Zum Auslassen der Kugeln aus dem Reaktorraum ist bevorzugt ein am Sumpf des ersten Reaktors ausgebildeter erster Auslass vorgesehen, wobei jener erste Auslass vorzugsweise durch einen trichterförmigen Randbereich begrenzt ist, so dass die besagten Kugeln insbesondere lediglich aufgrund ihrer Schwerkraft zum ersten Auslass hin geführt werden können und durch diesen den Reaktorraum verlassen können.

Weiterhin weist der erste Reaktor vorzugsweise eine Mehrzahl an längs erstreckten Elementen auf, die insbesondere zum Verteilen der Kugeln im Reaktorraum quer zur Bewegungsrichtung verlaufend im Reaktorraum angeordnet sind, wobei jene längs erstreckten Elemente insbesondere je zwei aufeinander zu laufende Seiten aufweisen, die eine dem ersten Einlass des ersten Reaktors zugewandte Kante ausbilden. Die besagten längs erstreckten Elemente sind somit im Querschnitt keilförmig ausgebildet. Aufgrund der Neigung der besagten Seiten gegenüber der Längsachse bzw. Vertikalen werden die auf die längserstreckten Elemente auftreffenden Kugeln durch die besagten Seiten jeweils horizontal abgelenkt, was die Wanderbewegung der Kugeln nach unten unterstützt.

Weiterhin kann alternativ oder ergänzend hierzu ein erstes Fördermittel im Reaktorraum vorgesehen sein, um die Kugeln aktiv entlang der Bewegungsrichtung im Reaktorraum bewegen (fördern) zu können. Hierzu kann das besagte erste Fördermittel beispielsweise eine (archimedische) Schnecke aufweisen, deren Welle vorzugsweise mit der Längs- bzw. Zylinderachse des Mantels zusammenfällt. Mittels der Schnecke können die Kugeln entlang der Bewegungsrichtung zum ersten Auslass des ersten Reaktors abwärts gefördert werden.

Zum Beschicken des ersten Reaktors mit dem zu trennenden Gasgemisch ist am Mantel des ersten Reaktors vorzugsweise ein zweiter Einlass ausgebildet, über den jenes Gasgemisch in den Reaktorraum einleitbar ist. Der zweite Einlass ist vorzugsweise entlang der Längsachse des Mantels im mittleren Drittel ausgebildet, wobei insbesondere der zweite Einlass entlang der Längsachse bzw. der Vertikalen unterhalb des Füllstandes des Kugelbettes angeordnet ist, so dass das Gasgemisch durch das Kugelbett nach oben strömt. Das Kugelbett wird des Weiteren von oben mit Wasser beaufschlagt, so dass sich an den Kugeln ein Gashydrat anlagert, das durch ein erstes Gas des Gasgemisches und das besagte Wasser gebildet wird. Das zweite Gas des Gasgemisches reichert sich somit in einer gasförmigen Phase an. Die Erfindung ist jedoch nicht auf die Trennung binärer Gasgemische beschränkt.

Aufgrund der Abwärtsbewegung der Kugeln bzw. der Bewegung der Kugeln gegeneinander wird das entstehende Gashydrat laufend zermahlen und dabei mit den Kugeln abwärts transportiert. Auf diese Weise kann auf einen großen überstöchiometrischen Wasseranteil im Reaktorraum verzichtet werden.

Das besagte Wasser wird bevorzugt über einen am Kopf vorgesehenen dritten Einlass des ersten Reaktors auf die Kugeln gegeben, wobei jener dritte Einlass insbesondere durch eine Reihe von im Reaktorraum angeordneten Düsen gebildet wird, die zum Beregnen des Kugelbetts eingerichtet und vorgesehen sind.

Alternativ hierzu kann ein separater zweiter Reaktor vorgesehen sein, der zum Erzeugen eines Gashydrat-Wasser-Gemisches aus dem ersten Gas des Gasgemisches und Wasser ausgebildet ist. Dieser zweite Reaktor ist dann vorzugsweise über einen am Kopf des ersten Reaktors vorgesehen dritten Einlass mit dem ersten Reaktor verbunden, so dass bereits eine Gashydrat-Wassermischung in den Reaktorraum des ersten Reaktors eingeleitet werden kann.

Zum Aufbereiten der aus dem ersten Reaktor abgezogenen Kugeln weist die - Einrichtung bevorzugt eine mit dem ersten Auslass des ersten Reaktors verbundene Kolonne auf, wobei die Einrichtung insbesondere dazu ausgebildet ist, die Kugeln aus dem Reaktorraum in die besagte Kolonne zu fördern.

In der Kolonne werden die Kugeln und das anhaftende bzw. mitgeförderte Gashydrat vorzugsweise mittels eines Heizmittels erhitzt, um jenes Gashydrat wieder in das erste Gas und Wasser aufzuspalten.

Dabei weist die Kolonne vorzugsweise einen Kopf mit einem ersten Auslass auf, über den jenes erste Gas bzw. eine gasförmige Phase aus der Kolonne abziehbar ist. Hierbei kann jene gasförmige Phase in der das erste Gas angereichert ist über ein Ventil in den Reaktorraum zurückgegeben werden (Rücklauf).

Über einen zweiten Auslass, der vorzugsweise, mittig an der Kolonne ausgebildet ist (unterhalb des Wasserspiegels in der Kolonne) wird des weiterhin vorzugsweise das durch die Gashydrataufspaltung gewonnene Wasser aus der Kolonne abgezogen.

Zum Rückführen des besagten Wassers in den Reaktorraum des ersten Reaktors, ist der zweite Auslass der Kolonne vorzugsweise strömungsleitend mit dem dritten Einlass des Reaktors verbunden, und zwar insbesondere über einen Wärmeübertrager, der dazu ausgebildet ist, das rückzuführende Wasser vor dem Einleiten in den Reaktorraum, wo das Wasser auf die Kugeln aufgegeben wird, abzukühlen.

Weiterhin ist am Kopf des ersten Reaktors vorzugsweise ein zweiter Auslass zum Abziehen einer gasförmigen Phase vorgesehen, in der das zweite Gas aufgrund der Führung des Gasgemisches im Gegenstrom zu den Kugeln und dem in den Reaktorraum eingeleiteten Wasser angereichert ist. Diese Phase kann zum Kühlen der Kugeln (siehe unten) verwendet werden.

Die gereinigten Kugeln werden bevorzugt durch einen dritten, am Sumpf der Kolonne vorgesehenen Auslass aus der Kolonne herausgeführt, wobei insbesondere ein zweites Fördermittel vorgesehen ist, das dazu ausgebildet ist, die Kugeln zum ersten Einlass des ersten Reaktors zurück zu fördern, wobei insbesondere das zweite Fördermittel einen Stetigförderer umfasst, der insbesondere ein Becherwerk und/oder eine Schnecke aufweisen kann.

Um die Kugeln vor dem erneuten Eingeben in den ersten Reaktor kühlen zu können, ist insbesondere ein Kühlmittel vorgesehen, das vorzugsweise durch einen Wärmeübertrager gebildet ist, der insbesondere dazu ausgebildet ist, die Kugeln in Wärmeaustausch mit der aus dem zweiten Auslass des ersten Reaktors abgezogenen gasförmigen Phase zu bringen.

Die Apparatur kann auch als "Umkristallisationsapparatur" genutzt werden. Hierbei zermahlen die Kugeln (Mahlkörper) den gebildeten Feststoff und sorgen damit für eine stetige Bildung neuer Stoffaustauschoberflächen. Denkbar ist die Gleichstromfahrweise von einer Lösungsmittelflüssigkeit mit dem umzukristallisierenden Feststoff: Eine heiße Lösung oder verunreinigte Kristalle werden oben in der Kolonne aufgegeben. Von oben wird zusätzlich Lösungsmittel dosiert dazugegeben. Kälteres Gas strömt von unten nach oben durch die Kugelpackung. Die Kugeln bewegen sich nach unten. Auf dem Weg nach unten bilden sich neue Kristalle mit weniger Verunreinigungen. Die gereinigten Kristalle werden im Sumpf abgezogen. Die Einstellung des Temperaturprofils ist auch mit Kühlvorrichtungen in der Kolonne denkbar. Acetylsalicylsäure kann als exemplarisches Beispiel für die Umkristallisation genannt werden.

Weitere Einzelheiten und Vorteile der Erfindung sollen durch die nachfolgenden Figurenbeschreibungen von Ausführungsbeispielen anhand der Figuren erläutert werden.

Es zeigen:
- Fig. 1: eine schematische Ansicht einer erfindungsgemäßen Einrichtung zum Trennen eines Gasgemisches;
- Fig. 2: eine Abwandlung eines ersten Reaktors gemäß Figur 1; und
- Fig. 3: eine geschnittene Ansicht des Reaktors gemäß Figur 2 entlang der Linie III-III der Figur 2.

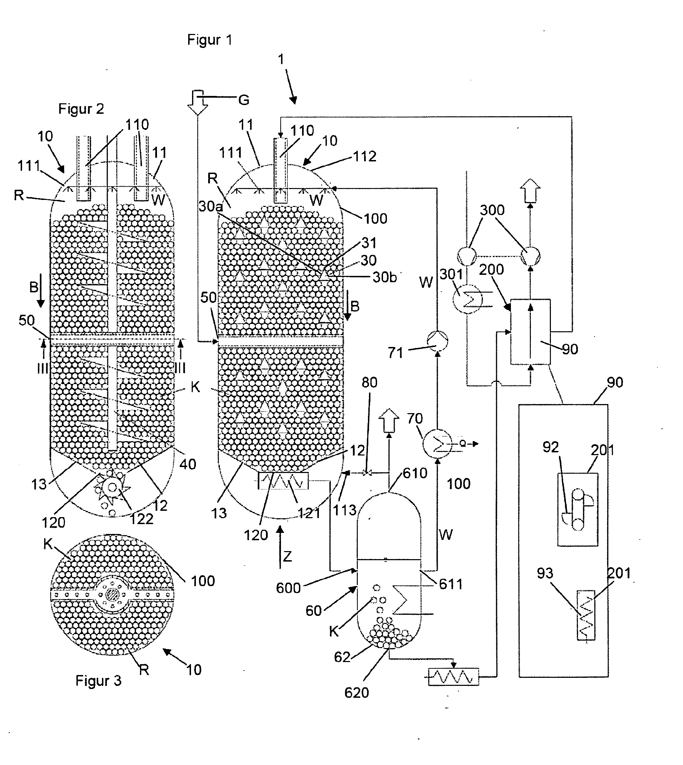

Figur 1 zeigt eine Einrichtung 1 zum Trennen eines Gasgemisches G. Die Einrichtung 1 weist einen ersten Reaktor 10 auf, in dem ein erstes Gas von einem zweiten Gas des Gasgemisches G durch Bildung eines Clathrat-Hydrates getrennt wird, d.h., ein Teil der Gaskomponenten reichert sich in einem aus jenem Gas und Wasser gebildeten Gashydratslurry an, während der andere Teil der Komponenten sich in einer verbleibenden gasförmigen Phase anreichert.

Der erste Reaktor 10 weist hierzu einen Mantel 100 auf, der einen Reaktorraum R definiert. Der Mantel 10 ist bevorzugt im Wesentlichen hohlzylinderförmig ausgebildet und erstreckt sich entlang einer Längsachse (Zylinderachse), die - bezogen auf einen bestimmungsgemäß angeordneten Zustand des ersten Reaktors 10 - entlang der Vertikalen Z verläuft. In den Reaktorraum R wird durch einen ersten Einlass 110, der an einem Kopf 11 des ersten Reaktors 10 vorgesehen ist, eine Mehrzahl an Kugeln K eingeführt, so dass diese im Reaktorraum R eine den Reaktorraum R zumindest abschnittsweise ausfüllende Kugelschüttung (auch Kugelbett oder Wanderbett) bilden.

Am Kopf 11 des Mantels 100 bzw. des ersten Reaktors 10 sind im Reaktorraum R Düsen 111 vorgesehen, die einen dritten Einlass 111 des ersten Reaktors 10 zum Beaufschlagen der Kugeln K mit Wasser W bilden. Es ist auch die Möglichkeit gegeben, in einem aus dem ersten Reaktor (Kolonne) 10 herausgezogenen Kopf bzw. separaten zweiten Reaktor die ersten Gashydrate sich bilden zu lassen.

Durch einen zweiten Einlass (Feed) 50, der entlang der Längsachse insbesondere mittig am Mantel 100 ausgebildet ist, wird das zu trennende Gasgemisch G in den Reaktorraum R eingeleitet, so dass es hiernach entlang der Längsachse nach oben durch die aus den Kugeln K gebildete Kugelschüttung strömt.

Dabei bildet das erste Gas mit dem in den Reaktorraum R gegebenen Wasser W eine Gashydratschlacke (Gashydratslurry), die sich an den Oberflächen der Kugeln K anlagert.

Die Kugeln K werden nun durch einen am Sumpf 12 des ersten Reaktors 10 ausgebildeten ersten Auslass 120 aus dem Reaktorraum R herausgeführt, so dass eine Bewegung der Kugeln K im Reaktorraum R entlang der Längsachse bzw. Vertikalen Z nach unten resultiert. D.h. die Kugeln K, das eingeleitete Wasser W sowie das gebildet Gashydrat werden im Gegenstrom zu dem zu trennenden Gasgemisch G gefahren. Um das Auslassen der Kugeln K aus dem ersten Reaktor 10 zu erleichtern, ist ein den ersten Auslass 120 begrenzender Randbereich 13 des Sumpfes 12 des ersten Reaktors 10 trichterförmig ausgebildet. Zum Herausführen der Kugeln K kann (entlang der Vertikalen Z) des Weiteren unterhalb des ersten Auslasses 120 eine Schnecke 121 angeordnet sein, mit der die Kugeln K insbesondere quer zur Vertikalen Z von dem ersten Auslass 120 weg gefördert werden können.

Die Bewegung der Kugeln K bzw. des Kugelbettes nach unten bedingt nun einen erzwungener Mitriss der an den Kugeln K anhaftenden Gashydrate, so dass mit Vorteil auf einen mit Wasser W stark verdünnten Slurry verzichtet werden kann, womit mit Vorteil nur eine leicht überstöchiometrische Menge an Wasser W benötigt wird.

Um eine gleichmäßige Wanderbewegung der Kugeln K zu unterstützen, sind weiterhin vorzugsweise Einbauten im Reaktorraum R in Form von längs erstreckten Elementen 30 vorgesehen, bei denen es sich insbesondere um dreieckige Profilstangen 30 handelt, die jeweils entlang der Horizontalen verlaufen und je zwei geneigte Seiten 30a, 30b aufweisen, die nach oben hin aufeinander zu laufen und dabei eine Kante 31 ausbilden, so dass die Kugeln K beim Auftreffen auf die besagten Seiten 30a, 30b quer zur Vertikalen Z abgelenkt werden.

Die Kugeln K werden bei ihrer Abwärtsbewegung vorzugsweise zusätzlich automatisch in Rotation versetzt, wodurch der auf den Kugeln K gebildete Hydratfilm zwischen den Kugeln K stetig zermahlen und eine andauernde Erneuerung der Phasengrenzfläche sicher gestellt wird.

Die Kugeln K weisen daher bevorzugt eine ausreichend große mechanische Stabilität auf, um den Gewichtsbelastungen im ersten Reaktor 10 standhalten zu können, sowie eine hohe Oberflächenhärte, um den Abrieb gering zu halten, und eine sehr kleine bis keine Porosität, durch welche ein Schlupf von Hydraten stattfinden kann. Idealerweise besitzt das Kugelmaterial eine hohe spezifische Wärmekapazität, um einerseits viel Kälte in den Kopf 11 des ersten Reaktors 10 eintragen zu können und um andererseits nur gering am Wärmeübergang teilzunehmen, so dass der Prozess in dem ersten Reaktor 10 nur wenig beeinflusst wird.

Die Wärmeabfuhr im Kopf 11 wird mit der direkten Kühlung durch zuvor vorgekühlte, zurückgeführte Kugeln K realisiert. Des Weiteren ist eine Wärmepumpenverschaltung zwischen dem Kopf 11 des ersten Reaktors 10 und einer nullten Stufe denkbar, die zum Animpfen von Wasser mit Gas zur Erzeugung eines ersten Gashydrat-Wasser-Gemisches sowie zur Wärmeabfuhr dient. Durch Wärmezufuhr dissoziieren in der nullten Stufe die gebildeten Hydrate, und die Gaskomponente, welche bevorzugt in die feste Phase übergeht, wird in dieser Stufe abgezogen. Labile Cluster bleiben in metastabiler Form über eine gewisse Zeit nach der Dissoziation erhalten-(Memoryeffekt). Wird dieses Wasser wieder Hydratbildungskonditionen ausgesetzt, verringert sich die sog. Induktionszeit (statistische Zeitspanne, die die metastabile Phase nach der Überschreitung der Gleichgewichtskurve benötigt bis zum Beginn von der Hydratbildung. Bei dieser Variante wird ein zum Kühlen verwendetes Kälteträgermedium durch Kühlrohre geführt, die im Kopf 11 des ersten Reaktors 10 angeordnet sind. Des Weiteren ist ein externer Kolonnenkopf zur Kühlung und Animpfung denkbar, wie z.B. bekannt aus US 2,399,723 (Crowther).

Am Kopf 11 des ersten Reaktors 10 ist zum Abziehen einer gasförmigen Phase, in der das zweite Gas angereichert ist ein zweiter Auslass 112 vorgesehen. Die abgezogene gasförmige Phase wird über einen Verdichter 300 einem Wärmeübertrager 301 zugeführt, in dem jene gasförmige Phase abgekühlt wird.

Die aus dem Reaktorraum R über den ersten Auslass 120 abgezogenen Kugeln K werden samt anhaftendem Gashydrat über einen ersten Einlass 600 in einen Zersetzungsapparat 60 geleitet, in der das Gashydrat durch Wärmezufuhr und ggf. kombinierter Druckabsenkung in das erste Gas und Wasser W aufgespalten wird. Die solchermaßen vom Gashydrat befreiten Kugeln K werden über einen dritten Auslass 620 aus der Kolonne 60 ausgelassen und mittels eines zweiten Fördermittels, z.B. in Form eines Stetigförderers 90 zum ersten Einlass des ersten Reaktors 10 zurückgefördert, um erneut in den Reaktorraum R eingegeben zu werden. Der Stetigförderer 90 kann entweder als pneumatische oder hydraulische Förderstrecke ausgeführt sein oder hierzu auch ein Becherwerk 92, oder eine Schnecke 93 aufweisen.

Vor dem Wiedereinführen in den Reaktorraum R werden die Kugeln K vorzugsweise gekühlt. Hierzu ist eine Kühlvorrichtung 200 vorgesehen, z.B. in Form eines Wärmeübertragers, in dem die Kugeln z.B. gegen die aus dem Kopf 11 des ersten Reaktors 10 abgezogene gasförmige Phase abgekühlt werden können. Der Mantel eines solchen Wärmeübertragers kann dabei durch eine Einhausung 201 des Stetigförderers 90 gebildet sein.

Das in der Kolonne 60 erzeugte Wasser W wird über einen zweiten Auslass 611 der Kolonne 60, der mittig an der Kolonne 60 vorgesehen ist, aus der Kolonne 60 abgezogen und über einen Wärmeübertrager 70 abgekühlt. Mittels einer Pumpe 71 wird das Wasser W über den besagten dritten Einlass 111 in den Kopf 11 des ersten Reaktors 10 eingeleitet. Die aus einem ersten Auslass 610 am Kopf der Kolonne 60 abgezogene gasförmige Phase kann über ein Ventil 80 in den Reaktorraum R zurückgeführt werden (Rücklauf).

Figur 2 zeigt im Zusammenhang mit Figur 3 eine Abwandlung des in der Figur 1 gezeigten ersten Reaktors 10, bei dem im Unterschied zur Figur 1 keine längs erstreckten Elemente 30 vorhanden sind, sondern ein erstes Fördermittel 40 in Form einer Schnecke, die eine entlang der Längsachse erstreckte Welle aufweist, um die sich schraubenförmig das Schneckengewinde windet. Die Schnecke (archimedische Schraube) ist dabei dazu ausgebildet, die Kugeln K entlang der Längsachse bzw. Vertikalen Z in der Bewegungsrichtung B nach unten zu fördern. Des Weiteren ist im Unterschied zur Figur 1 unterhalb des ersten Auslasses 120 des ersten Reaktors 10 ein Schaufelrad 122 anstelle einer Schnecke 121 angeordnet, mit der aus dem ersten Auslass 120 ausgelassene Kugeln K dem Stetigförderer 90 bzw. der Kolonne 60 zugeführt werden können. Weiterhin sind gemäß Figur 2 zwei erste Einlässe 110 vorgesehen, die parallel und beabstandet zur Längsachse des Mantels 100 angeordnet sind, so dass die Kugeln K abseits der besagten Welle im Bereich des Schneckengewindes in den Reaktorraum R gegeben werden können.

Anwendungsbeispiele für die Gasgemischtrennung (erstes Gas + zweites Gas) in einer erfindungsgemäßen Einrichtung 1 sind z.B.:
- Propan (C₃H₈) + Propylen (C₃H₆) (Trennschritt von Steamcrackerprodukten),
- Kohlenstoffdioxid (CO₂) + Stickstoff (N₂) (+ TBAB) als Modellsystem zur CO2-Abscheidung aus Kraftwerksabgasen für CCS (Carbon Capture and Storage, d.h., Kohlendioxidabscheidung und Lagerung) in der Nachverbrennungsabscheidung (Post-Combustion-Capture-Technologie, kurz Post-CC), und
- CO₂ + Wasserstoff (H₂) (+ TBAB) als Modellsystem für die Vorverbrennungsabscheidung (Pre-Combustion Capture, kurz Pre-CC) Hierbei kann ein Promoter, vorzugsweise TBAB (Tetra-n-butylammoniumbromid), dem Gasgemisch ggf. zur Erleichterung der Hydratbildung zugegeben werden.

Der Nachteil eines überstöchiometrischen Wasseranteils üblicher Reaktoren wird mit der erfindungsgemäßen Konstruktion gemindert; denn aufgrund des Zermahlens des Slurrys durch die Kugeln K und die Slurryförderung durch die Kugeln K ist ein höherer Gashydratanteil im Slurry S möglich, was sich positiv auf die Bildungs- und Zersetzungsraten des Gashydrats auswirkt, so dass der Reaktor 10 einen vergleichsweise geringeren Bauraum benötigt.

Ein weiterer Vorteil ist der Umstand, dass keine isotherme, sondern eine annähernd isobare Betriebsweise gefahren wird, wodurch eine innere Wärmeverschaltung von Bildungs- und Zersetzungswärme möglich ist.

Das Gasgemisch G kann in zwei Teilgemische unterschiedlicher Zusammensetzung aufkonzentriert werden. Geschieht dies unter Zuhilfenahme schwer flüchtiger Promotern, wie z.B. TBAB, muss keine Prozesseinheit zur Rückgewinnung vom Promoter vorgesehen werden.

### Bezugszeichenliste

| | |
|---|---|
| 1 | Einrichtung |
| 10 | Erster Reaktor |
| 11 | Kopf |
| 12 | Sumpf |
| 13 | Randbereich |
| 30 | Längserstrecktes Element |
| 30a, 30b | Seiten |
| 31 | Kante |
| 40 | Erstes Fördermittel |
| 50 | Zweiter Einlass |
| 60 | Kolonne |
| 61 | Kopf |
| 62 | Sumpf |
| 70 | Wärmeübertrager |
| 71 | Pumpe |
| 80 | Ventil |
| 90 | Zweites Fördermittel (Stetigförderer) |
| 92 | Becherwerk |
| 93 | Schnecke |
| 100 | Mantel |
| 110 | Erster Einlass |
| 111 | Dritter Einlass |
| 112 | Zweiter Auslass |
| 113 | Vierter Einlass |
| 120 | Erster Auslass |
| 121 | Schnecke |
| 122 | Schaufelrad |
| 200 | Kühlvorrichtung |
| 201 | Mantel (Einhausung) |
| 300 | Verdichter |
| 301 | Wärmeübertrager |
| 600 | Erster Einlass |
| 610 | Erster Auslass |
| 611 | Zweiter Auslass |
| 620 | Dritter Auslass |
| B | Bewegungsrichtung |
| G | Gasgemisch |
| K | Kugeln |
| R | Reaktorraum |
| W | Wasser |
| Z | Vertikale |

## Patentansprüche

1. Einrichtung zum Trennen eines Gasgemisches, mit:
- einem ersten Reaktor (10), mit einem Mantel (100), der einen Reaktorraum (R) des ersten Reaktors (10) zur Aufnahme des zu trennenden Gasgemisches (G) begrenzt,
**dadurch gekennzeichnet,**
**dass** die Einrichtung (1) zum Zermahlen eines im Reaktorraum (R) befindlichen Stoffes dazu eingerichtet und vorgesehen ist, eine Mehrzahl an Kugeln (K) durch den Reaktorraum (R) im Gegenstrom zu jenem Gasgemisch (G) entlang einer Bewegungsrichtung (B) zu führen.

2. Einrichtung nach Anspruch 1, **dadurch gekennzeichnet, dass** die Kugeln (K) eine Kugelschüttung bilden, wobei die Kugeln (K) beim Führen entlang der Bewegungsrichtung (B) durch den Reaktorraum (R) jenen Stoff entlang der Bewegungsrichtung (B) mitnehmen, so dass jener Stoff insbesondere zwischen die Kugeln (K) gelangt und durch die Kugeln (K) zermahlen wird.

3. Einrichtung nach Anspruch 1 oder 2, **dadurch gekennzeichnet, dass** die Kugeln (K) aus einem Metall, einem Stahl, einer Aluminiumlegierung, einem Hartgummi, einem,Glas, einem Kunststoff oder einer Keramik bestehen.

4. Einrichtung nach einem der vorhergehenden Ansprüche, **dadurch gekennzeichnet, dass** sich der Mantel (100) entlang einer Längsachse längs erstreckt, wobei jene Längsachse insbesondere mit der Vertikalen (Z) zusammenfällt, und wobei insbesondere die Bewegungsrichtung (B) entlang der Vertikalen (Z) nach unten gerichtet ist.

5. Einrichtung nach Anspruch 4, **dadurch gekennzeichnet, dass** der erste Reaktor (10) einen Kopf (11) aufweist, der insbesondere einem Sumpf (12) des ersten Reaktors (10) entlang der Längsachse gegenüberliegt, wobei insbesondere am Kopf (11) ein erster Einlass (110) zum Einführen der Kugeln (K) in den Reaktorraum (R) vorgesehen ist, und wobei insbesondere am Sumpf (12) ein erster Auslass (120) zum Auslassen der Kugeln (K) aus dem Reaktorraum (R) vorgesehen ist, und wobei insbesondere ein den ersten Auslass (120) begrenzender Randbereich (13) des ersten Reaktors (10) trichterförmig ausgebildet ist, und wobei insbesondere die Einrichtung (1) dazu ausgebildet ist, jene durch den ersten Auslass (120) ausgelassenen Kugeln (K) zum ersten Einlass (110) zurück zu fördern, so dass die Kugeln (K) insbesondere in einem Kreislauf geführt werden.

6. Einrichtung nach einem der vorhergehenden Ansprüche, **dadurch gekennzeichnet, dass** im Reaktorraum (R) eine Mehrzahl an längs erstreckten Elementen (30) quer zur Bewegungsrichtung (B) angeordnet ist, wobei jene längs erstreckten Elemente (30) insbesondere je zwei aufeinander zu laufende Seiten (30a, 30b) aufweisen, die eine dem ersten Einlass (110) des ersten Reaktors (10) zugewandte Kante (31) ausbilden.

7. Einrichtung nach einem der vorhergehenden Ansprüche, **dadurch gekennzeichnet, dass** zum Transportieren der Kugeln (K) entlang der Bewegungsrichtung (B) ein erstes Fördermittel (40), insbesondere in Form einer Schnecke, im Reaktorraum (R) vorgesehen ist.

8. Einrichtung nach einem der vorhergehenden Ansprüche, **dadurch gekennzeichnet, dass** zum Einlassen des zu trennenden Gasgemisches (G) in den Reaktorraum (R) am Mantel (100) ein zweiter Einlass (50) vorgesehen ist, wobei jener zweite Einlass (50) insbesondere im mittleren Drittel am Mantel (100) ausgebildet ist.

9. Einrichtung nach einem der vorhergehenden Ansprüche, **dadurch gekennzeichnet, dass** der erste Reaktor (10) zum Aufgeben von Wasser (W) auf die Kugeln (K) eingerichtet und vorgesehen ist, so dass sich als besagter Stoff ein aus einem ersten Gas des Gasgemisches (G) und dem Wasser (W) gebildetes Gashydrat an den Kugeln (K) anlagert.

10. Einrichtung nach Anspruch 5 oder einem der Ansprüche 6 bis 9 soweit rückbezogen auf Anspruch 5, **dadurch gekennzeichnet, dass** der erste Reaktor (R) zumindest einen am Kopf (11) vorgesehenen dritten Einlass (111) aufweist, insbesondere in Form zumindest einer im Reaktorraum (R) angeordneten Düse, der zum Aufgeben von Wasser (W) auf die Kugeln (K) eingerichtet und vorgesehen ist.

11. Einrichtung nach Anspruch 5 und nach Anspruch 9, **dadurch gekennzeichnet, dass** ein separater zweiter Reaktor vorgesehen ist, der zum Erzeugen eines Gashydrat-Wasser-Gemisches aus dem ersten Gas und Wasser eingerichtet und vorgesehen ist, wobei jener zweite Reaktor zum Beaufschlagen der Kugeln (K) mit jenem Gashydrat-Wasser-Gemisch über einen dritten Einlass des ersten Reaktors (10) mit dem Kopf (11) des ersten Reaktors (10) verbunden ist.

12. Einrichtung nach Anspruch 5 und nach Anspruch 9 oder einem der Ansprüche 10 bis 11 soweit rückbezogen auf Anspruch 9, **dadurch gekennzeichnet, dass** eine mit dem ersten Auslass (120) des ersten Reaktors (10) verbundene Kolonne (60) vorgesehen ist, wobei die Einrichtung (1) insbesondere dazu eingerichtet und vorgesehen ist, die Kugeln (K) aus dem Reaktorraum (R) über einen ersten Einlass (600) der Kolonne (60) in die Kolonne (60) zu fördern, wobei jene Kolonne (60) dazu ausgebildet ist, in die Kolonne (60) geförderten Kugeln (K) und mitgenommenem Gashydrat Wärme zu zuführen, um jenes Gashydrat in das erste Gas und Wasser (W) aufzuspalten, wobei die Kolonne (60) insbesondere einen Kopf (61) mit einem ersten Auslass (610) aufweist, über den jenes erste Gas aus der Kolonne (60) abziehbar ist, und wobei die Kolonne (60) insbesondere einen zweiten Auslass (611) aufweist, über den jenes Wasser (W) aus der Kolonne (60) abziehbar ist, wobei insbesondere jener zweite Auslass (611) der Kolonne (60) zum Beschicken der Kugeln (K) mit jenem Wasser (W) über den dritten Einlass (111) des ersten Reaktors (10) mit dem Reaktorraum (R) strömungsleitend verbunden ist, und wobei insbesondere jener zweite Auslass (611) der Kolonne (60) zum Abkühlen des Wassers (W) über einen Wärmeübertrager (70) mit dem Reaktorraum (R) verbunden ist.

13. Einrichtung nach Anspruch 9 oder einem der Ansprüche 10 bis 12 soweit rückbezogen auf Anspruch 9, **dadurch gekennzeichnet, dass** am Kopf (11) des ersten Reaktors (10) ein zweiter Auslass (112) zum Abziehen einer gasförmigen Phase vorgesehen ist, in der das zweite Gas angereichert ist.

14. Einrichtung nach Anspruch 12 oder nach Anspruch 13 soweit rückbezogen auf Anspruch 12, **dadurch gekennzeichnet, dass** die Kolonne (60) einen Sumpf (62) mit einem dritten Auslass (620) zum Auslassen der Kugeln (K) aus der Kolonne (60) aufweist, wobei insbesondere ein zweites Fördermittel (90) vorgesehen ist, das dazu eingerichtet und vorgesehen ist, die Kugeln (K) zum ersten Einlass (110) des ersten Reaktors (10) zurück zu fördern, wobei insbesondere das zweite Fördermittel (90) einen Stetigförderer umfasst, der insbesondere ein Becherwerk (92) und/oder eine Schnecke (93) aufweist, wobei insbesondere ein Kühlvorrichtung (200) zum Kühlen der Kugeln (K) vorgesehen ist, wobei das Kühlvorrichtung (200) insbesondere durch einen Wärmeübertrager gebildet ist, der insbesondere dazu eingerichtet und vorgesehen ist, die Kugeln (K) in Wärmeaustausch mit der aus dem zweiten Auslass (112) des ersten Reaktors (10) abgezogenen gasförmigen Phase zu bringen.
